Europäisches Patentamt

European Patent Office

Office européen des brevets

(19)

(11) EP 0 791 488 B1

(12) **EUROPEAN PATENT SPECIFICATION**

(45) Date of publication and mention
of the grant of the patent:
**26.03.2003   Bulletin 2003/13**

(21) Application number: **95932024.3**

(22) Date of filing: **01.09.1995**

(51) Int Cl.⁷: $B60C\ 23/04$, $B60S\ 5/04$

(86) International application number:
**PCT/ES95/00103**

(87) International publication number:
**WO 97/009187 (13.03.1997 Gazette 1997/12)**

(54) **METHOD AND SYSTEM FOR MEASURING AND ADJUSTING PRESSURE OF TYRES**

VERFAHREN UND SYSTEM ZUR MESSUNG UND EINSTELLUNG VON REIFENDRUCK

PROCEDE ET SYSTEME DE MESURE ET D'AJUSTEMENT DE LA PRESSION DE PNEUMATIQUES

(84) Designated Contracting States:
**AT BE CH DE DK ES FR GB GR IE IT LI LU MC NL PT SE**

(43) Date of publication of application:
**27.08.1997   Bulletin 1997/35**

(73) Proprietor: **FAST AIR, S.L.**
**28016 Madrid (ES)**

(72) Inventor: **LOUREIRO BENIMELI, Fermin, Jaime**
**E-28016 Madrid (ES)**

(74) Representative: **Urizar Anasagasti, José Antonio**
**Puerto Rico 6A, Bajo**
**28016 Madrid (ES)**

(56) References cited:
**EP-A- 0 284 895      EP-A- 0 301 443**
**WO-A-94/03349        WO-A-94/04398**
**FR-A- 2 548 780       US-A- 3 913 632**
**US-A- 4 334 215**

## Description

OBJECT OF THE INVENTION

The present invention relates to a method which allows to measure tyre pressure and adjust it automatical to reference values, taking into account the variations which may have been produced in said reference values due to changes in tyre temperature.

BACKGROUND OF THE INVENTION

One of the factors which directly affects the driving of a vehicle is the pressure of the tyres and, although checking the pressure should be, in principle a simple operation, when the user attempts to carry out the checking he finds a series of problems that in many occasions lead him to give up the attempt as such operation implies loss of time while it also gives rise to getting the users hands dirty, or at best, the user inflates tyres untill a value of pressure which he believes to be the correct one, while the appropriate pressure at that particular moment would be different.

The problem for the user when checking the pressure is that he has to obtain the pressure values corresponding to front and rear wheels; however these values vary depending upon whether the tyres are cold or warm. As the quantification of these factors is subjective, the user usually chooses an average pressure or a reference pressure value that he considers the most suitable.

At present there are known pressured-air supplying machines on the market, which incorporate a series of push-buttons, each one of which corresponding to a pre-determined pressure value, so that when one of the push-buttons is pressed the machine adjusts the tyre pressure to the value assigned to the pressed push-button.

The influence of temperature of the tyres on their pressure is important; that is why tyre manufacturers recommend an increase of the reference value of 0.3 bar if the pressure is checked when tyres are warm. In doing so, the problem of determination of the temperature of the tyre comes across, as this temperature may vary more than 50°C depending upon the environmental temperature and, on the other hand, upon whether the tyre has been resting or it has just finished running at a high speed.

The document Wo 94/04398 shows a method according to the preamble of claim 1.

DESCRIPTION OF THE INVENTION

In order to overcome these problems, the system according to claim 6 which is object of this invention has been developed.

The method of the invention according to claim 1 permits, during the pressure checking and during the adjustment of the same, to know which is the present pressure of the tyre, the temperature inside the same and the corresponding pressure that it should have, as a function of the temperature inside the tyre as well as the nominal pressure at environmental temperature given by the manufacturer.

Once the temperature and the present pressure of tyre are known, the user can effect the pressure adjustment by using an automatic adjustment procedure.

In order to know the data corresponding to the present temperature and pressure of a tyre, the system of the invention uses a sensor mechanism installed inside the tyre.

In order to obtain the formula which would permit the calculation of the pressure corresponding to a nominal pressure in terms of temperature, the following premises are assumed:

1. Tyre volume variation is negligible in spite of pressure changes, as the pressure variation affects the rigidity of the tyre and the inside canvas frame avoids a substantial change of volume.

2. Pressure variation due to temperature is linear, as there are no changes in gas physical state.

The above point is based on Gay-Lussac's Law of the Behaviour of Gases, that is governed by the following formula:

$$P \cdot V = n \cdot R \cdot T$$

Wherein P, V and T are variables of pressure, volume and temperature respectively , n is the number of moles and R is the gas constant of perfect gases. In case of constant volumes , the following proportion can be derived from the above formula:

$$P_0/T_0 = P_1/T_1$$

Wherein $P_0$ is the nominal pressure recommended by the manufacturer at enviromental temperatur $T_0$ (293 K, equal to 20°C).

Therefore, the formula that permits the calculation of the equivalent pressure in terms of temperature is the following:

$$P_1 = (T + 273) \cdot P_0/293$$

Wherein $P_1$ is the corrected equivalent pressure in terms of temperature, T is temperature (in °C) measured inside the tyre by the thermocouple, and $P_0$ is the pressure at ambient temperature (293 K) recommended by the vehicle manufacturer.

The system of this invention further comprises an air supplying machine to adjust tyre pressure, taking into consideration the temperature inside the same. This machine has a connection mouth for connection with the tyre valve.

The air supplying machine has a keyboard, by means of which the nominal pressure value is introduced; a microprocessor adapted to calculate an equivalent pressure, using data from the nominal pressure and the temperature inside the tyre; and a display on which data regarding nominal pressure, present pressure, temperature and equivalent pressure are visualized.

Said connection mouth for connection with the valve further has means to effect a safe blocking on the valve when said connection mouth is fixed on the same.

The arrangement of the blocking means is such as to permit the mouth to remain firmly attached to the valve during the operation of pressure adjustment, whereas when the operation is ended, it can be easily unblocked by the user by pulling from an external case of the same. This disposition is made possible due to the use of a generally cylindrical body with longitudinal grooves which allow said body to be subject to perimeteral compression, thus reducing its diameter, thereby making possible a firm grip of the same over a valve.

Furthermore, said air supplying machine optionally incorporates an auxiliary tool which permits to screw or to unscrew the core of the valve if deemed necessary.

Said tool consists of an essentially cylindrical body which has a cavity at one end, axially disposed to allow the placing of a rod shaped element therein whose free end has a configuration suitable for being coupled to a core. Said tool further has, at the opposite end thereof, another cavity axially arranged, which has a wrench-like configuration which permits the manipulation of valves, end caps or any element related to this field.

The tyre pressure adjustment is carried out by a pneumatic equipment included within the machine, said equipment being activated either by a control circuit governed by the microprocessor if the user chooses the equivalent pressure calculated by the machine or manually by means of using push buttons (+) and (-), in case that the user prefers to put a pressure different to the calculated one.

According to the invention, the process of checking the present temperature and pressure of the tyre is carried out by means of a sensor and emitter device attached to the surface of the rim of the tyre which remains inside the tyre, so that in operation conditions, it can directly detect said present pressure and temperature of the tyre.

The data obtained are subsequently converted into electronic signals which are then converted into radiofrequency waves and are transmitted towards the outside of the tyre.

Said radiofrequency waves are later received by a portable receiver set arranged as a remote control apparatus which also serves for switching said receiver and emitter device on.

Said remote control apparatus further has several push-buttons by means of which the nominal pressure value of the tyre at ambient temperature, which is a value given by the manufacturer, is manually introduced therein; and a display means for displaying values of the nominal pressure, the present temperature and pressure both detected by the sensor device, as well as the equivalent pressure of the tyre which is calculated by a microprocessor included in the remote control apparatus in the same manner as described hereinbefore in the case of the pressure portable tester.

Once the equivalent pressure which is required for the tyre at the moment of checking is known, the user introduces this data into an air supplying machine with characteristics as mentioned above , in order to adjust the tyre pressure.

It is to be pointed out that the air supplying mouth would not need the use of contact means to perform the proper reading of the present temperature and pressure inside the tyre.

The receiver and emitter device essentially consists of at least one thermocouple, a pressure detector, a circuit for reception and emission radiofrequency waves, a circuit for converting radiofrequency waves into electronic signals and vice versa and a power supply circuit which operates by using electronic energy supplying batteries.

Advantageously the air supplying machine incorporates means for receiving radiofrequency signals emitted from said remote control apparatus in order to detect said signals and process them to obtain data related to the equivalent pressure which has to be supplied to the tyre by the air supplying machine itself.

For that purpose, said machine may incorporate a radiofrequency waves receiver and a converter for converting radiofrequency waves into electronic signals which are later supplied to the microprocessor incorporated in the air supplying machine.

In this manner, the user will initially use the remote control apparatus to detect the present temperature and pressure of the tyre, calculate the equivalent pressure to be given to the tyre, and transmit the value thereof to the air supplying machine, which after receiving said value, starts the operation of adjusting the tyre pressure in accordance with the equivalent pressure.

Optionally, the remote control apparatus may be incorporated in the front panel inside the vehicle where the user can control and check the pressure and the temperature of the tyre without having to get out of the vehicle, or even perform the controlling and checking during the driving.

In this latter case, the remote control apparatus will effect the measurement of present pressure and temperature of each tyre of vehicle separately and it will visualize them successively, or by according to the selection choice of the user.

For this purpose, the microprocessor of the remote control apparatus must be programmed to effect independant readings of each one of the wheels.

The method and system for vehicle tyre pressure measuring and adjusting described above further allows the automatic execution of certain functions, without a direct intervention of the user.

One of said functions, described herein in a non-limitative manner, is to perform the pressure measurement and adjustment of each tyre of the vehicle using a valve locating mechanism and a subsequent connection of the air supplying mouth-pieces to each valve.

In order to carry out this operation, the wheels of the vehicle are located on rollers operated by means of a motor or a similar mechanism so that their synchronized rotation makes the vehicle wheel rotate untill its valve is placed at a pre-determined position where it will receive an air supplying mouth-piece which carries out the measurement and the further adjustment of tyre pressure.

To place tyre valve in said pre-determined position use is made of a proximity detection process.

## DESCRIPTION OF THE DRAWINGS

To complete the description provided and in order to achieve a better understanding of the features of the invention the present description is accompanied by a series of drawings, as an integral part of the same, representing in an illustrative and non-limitative manner the following:

- Figure 1 shows a front view of the air supplying machine.
- Figure 2 shows a block diagram of the air supplying machine.
- Figure 3 shows a diagram of the setting of a sensor and emitter device on a wheel rim as well as the remote control apparatus in relation to the tyre and the air supplying machine.
- Figure 4 is a block diagram of the main components of a sensor and emitter device.
- Figure 5 is a block diagram of a remote control apparatus.
- Figure 6 is a front view of an air supplying mouth with blocking-means axially cross-sectioned according to a vertical plane.

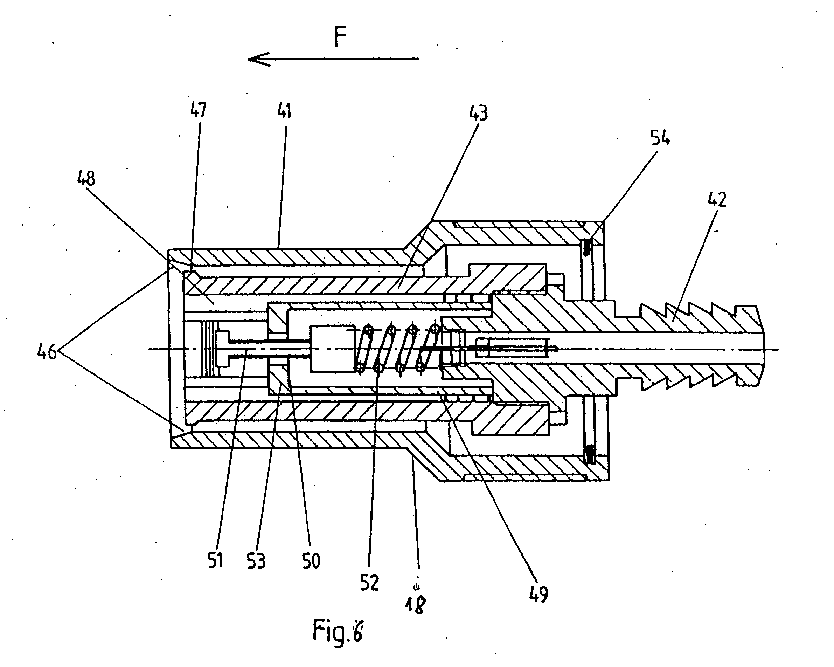

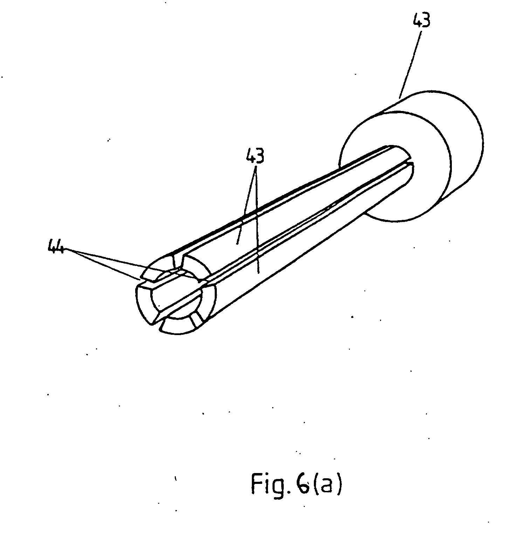

- Figure 6 is a perspective view of a blocking body of the mouth of Figure 6.

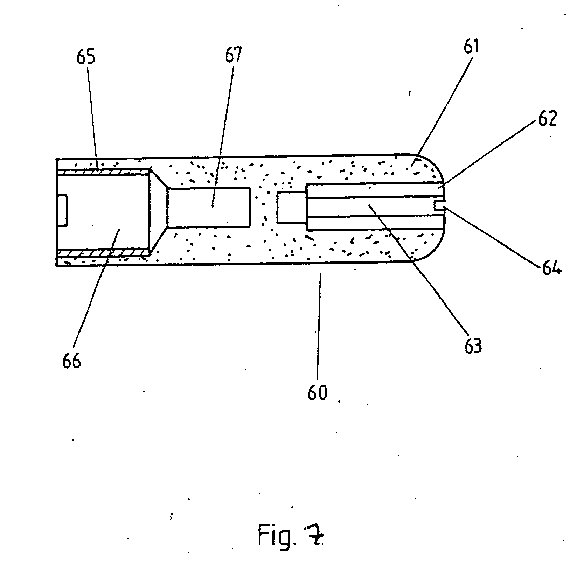

- Figure 7 is a front view of an auxiliary tool employed to screw and to unscrew the valve core of a valve, axially cross-sectioned according to a vertical plane.

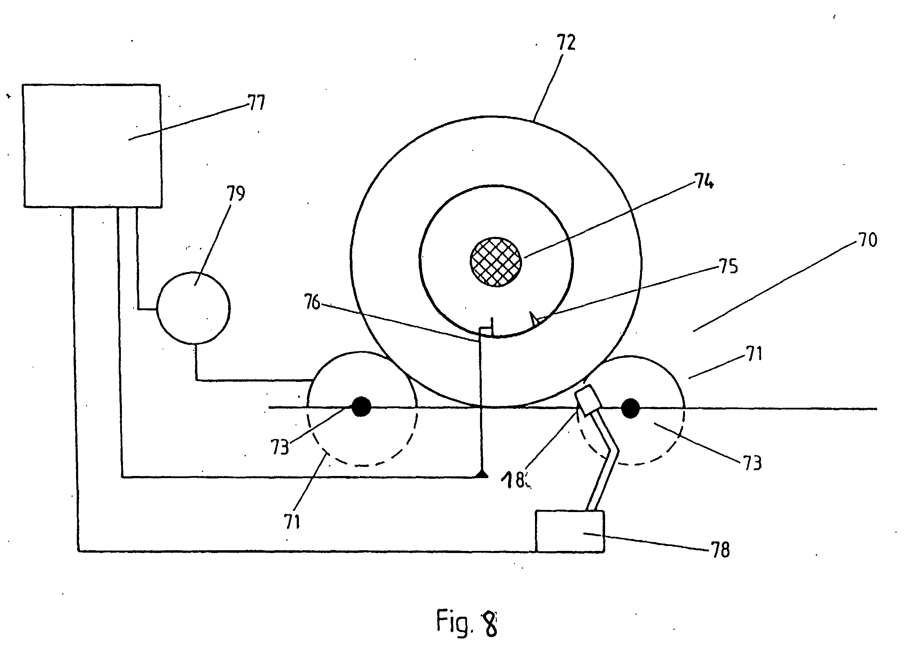

- Figure 8 is a diagram of an automatic pressure measurement and adjustment system using rotatable rollers.

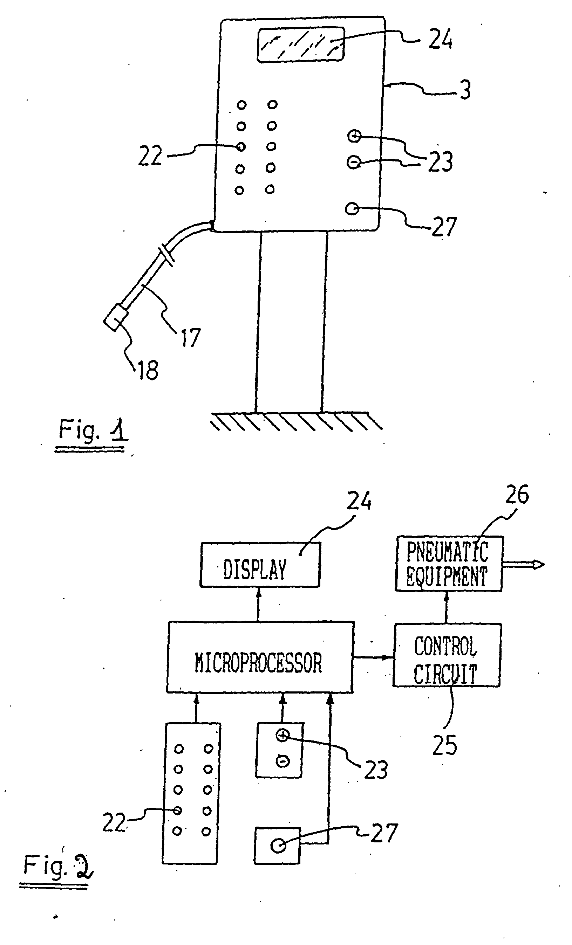

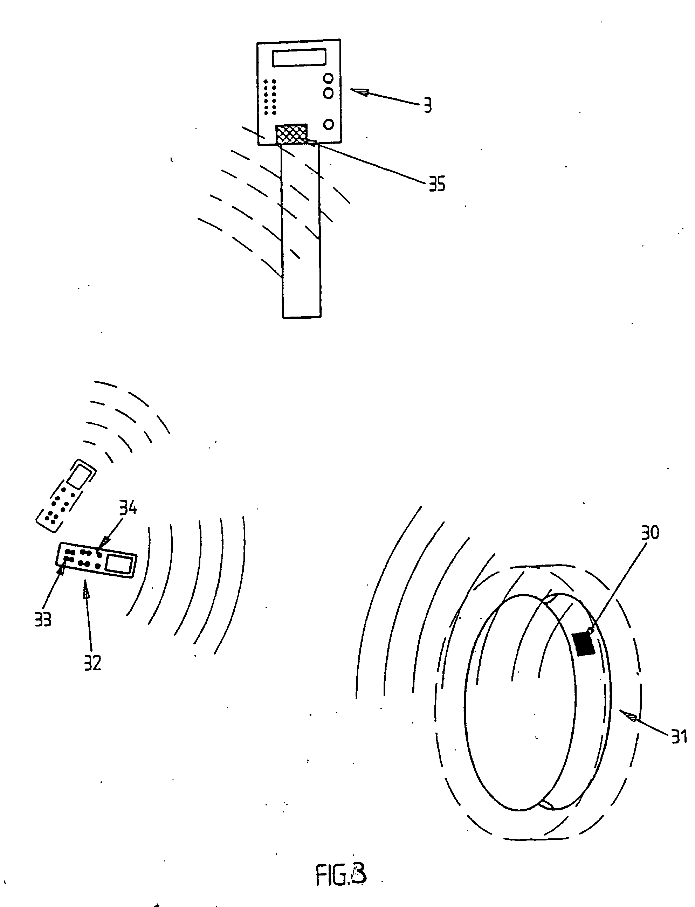

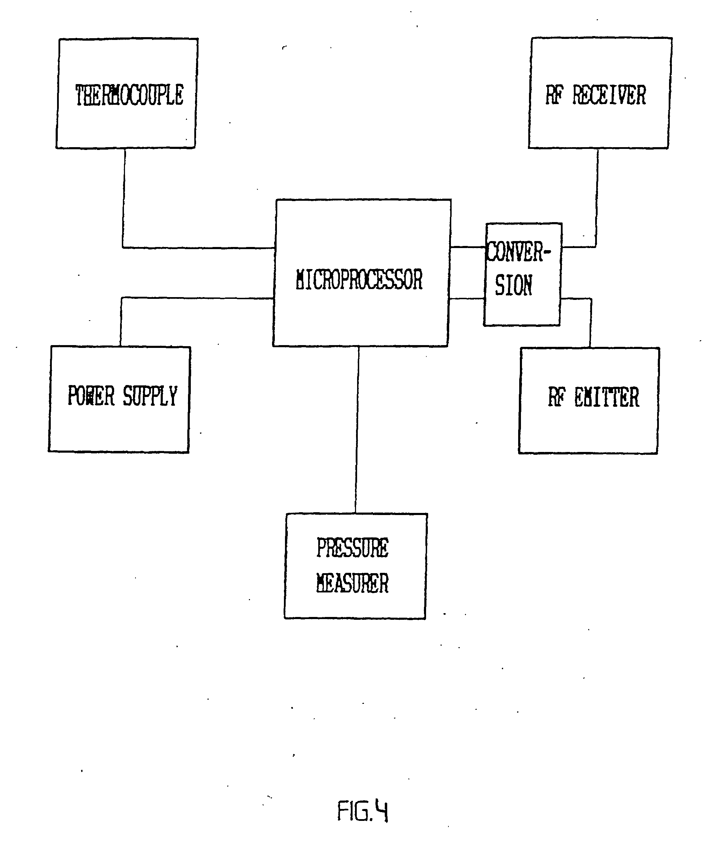

The machine (3) according to figure 1, in charge of adjusting tyre pressure incorporates a hose (17) which ends at a mouthpiece (18), suitable to be coupled onto the valve (76).

According to an embodiment of the mouthpiece, represented in Figure 6, the mouthpiece (18) consists of a evolving body (41) which has a cylindric portion with a larger diameter over the surface of which there are several ribs presented to facilitate the handling of the mouthpiece and another cylindrical portion with a smaller diameter which forms together with the first portion the evolving body inside which the mouthpiece components are located. Said components include an outlet tip (42) which is threaded at an end inside a blocking body (43). This blocking body (43) has a generally cylindrical configuration which, in one end where said outlet tip (42) is threaded, has a longer diameter and along the remaining surface has several longitudinal grooves (44) as can be seen in Figure 6(a). Said grooves allow the mobility of movable portions adjacent to the same as the blocking body (43) is made of a preferably metallic material with certain flexibility in a radial direction.

The blocking body (43) has mobility in an axial direction inside the evolving body (41) whereas movable portions (45) remain located in the same. Said evolving body (41) has at its end opposite to the outlet tip (42) and on its inner surface, a perimetric recess (46). Additionally, the blocking body (43) has in the free ends of each one of the mobile portions a salient portion (47).

With this arrangement the blocking body (43) has mobility inside the evolving body (41) untill the point of coincidence of salients (47) with the perimetric recess (46). At this point salients (47) fit into perimetric recess (46) due to the effect of mobile portions (45) which tend to open outwards in a radial direction thereby obtaining a larger diameter in the opening part (48). Therefore, when the end of a tyre valve is introduced into the opening (48) of the blocking body (43) when the latter is in a situation of the opening (48) having its larger diameter, the evolving body (41) slides over the blocking body (43) in a direction opposite to the entry of the valve, for example in the direction of arrow "F" in Figure 9. Said movement makes the salient portions (47) of the blocking body (43) to move out of the perimeteral recess (46) thereby reducing the diameter of the opening (48) which has the end of the tyre valve inside.

Said diameter reduction of opening (48) on the valve produces the blocking effect of the blocking body (43) on the valve.

In order to unblock the valve, the evolving body (41) slides in a direction opposite to arrow "F" untill salient portions (47) again fit into the perimeteral recess (46), thereby increasing the diameter of opening (48) which allows the valve of the same to be moved out.

The mouthpiece (18) further consists of a series of pieces which allow its functionality such as a cylindrical sleeve (49) which at a first end thereof is attached to the outlet tip (42) and at another end has a base surface (50) with a central orifice through which rod (51) passes. This latter, at the end corresponding to the entry of the tyre valve, has a plane base which rests over the valve core, and at the opposite end it has a cubic or rectangular-prismatic configuration which permits the passage of air and which rests on an end of a spring (52) whose effect is that rod (51) exerts pressure on valve core. On the base surface (50) of the sleeve (49) an elastic joint (53), made of rubber for example, is arranged whose objective is to provide sealing when the valve is introduced into the opening (48) and lays on the joint (53). Additionally the cervoclip (54) arranged in the opening corresponding to outlet tip (42) tends to avoid the inside mechanism of the evolving body (41) from moving out.

The air supplying machine (3) optionally has an additional tool which permits the threading and unthreading the core of tyre valves.

Said tool (60), as shown in Figure 7, consists of an essentially cylindric body (61) which has at an end a cavity (62) axially disposed to permit the lodging of a rod shaped utensil (63), whose free end (64) has a suitable configuration to couple on a core. Said rod (63) remains fixed inside the cylindric body (61).

At its opposite end, tool (60) has another cavity (65) axially disposed which has a first portion (66) with a larger diameter and a keyshaped configuration which permits operation on valves, end caps or any element related to the field of tyres. Said cavity (65) also consists of a second portion (67) intended to allow the introduction of the ends of valves while they are being manipulated by means of the first keyshaped portion (66).

The machine (3), in the same manner as that of the tester, externally has push-buttons (22) which have specific values assigned thereto corresponding to the pressure values mostly used. Each one of said push-buttons (22) may preferably have a colour specially assigned to its pressure value. By activating the corresponding push-button (22), the nominal pressure value of tyre at enviromental temperature as given by the vehicle manufacturer, is introduced into the microprocessor, the microprocessor making the calculation of the pressure equivalent to the nominal depending on temperature. The machine (3) further incorporates two push-buttons (23) which permit to adjust the nominal pressure value in the case where it would not coincide with any push-button (22).

The microprocessor of the machine is connected to a display (24), on which data regarding nominal pressure, present pressure, equivalent pressure and temperature are displayed; and to a control circuit (25) which controls a pneumatic equipment (26) in charge of adjusting the tyre pressure by introducing or extracting air in and out of the same respectively, by means of the hose (17).

In this manner, if push-button (22) corresponding to a pre-determined nominal pressure is activated and the mouthpiece (18) is connected to the valve (76), the microprocessor calculates the equivalent pressure and acts on the pneumatic equipment (26) by means of control circuit (25), adjusting the tyre pressure to the calculated equivalent pressure value.

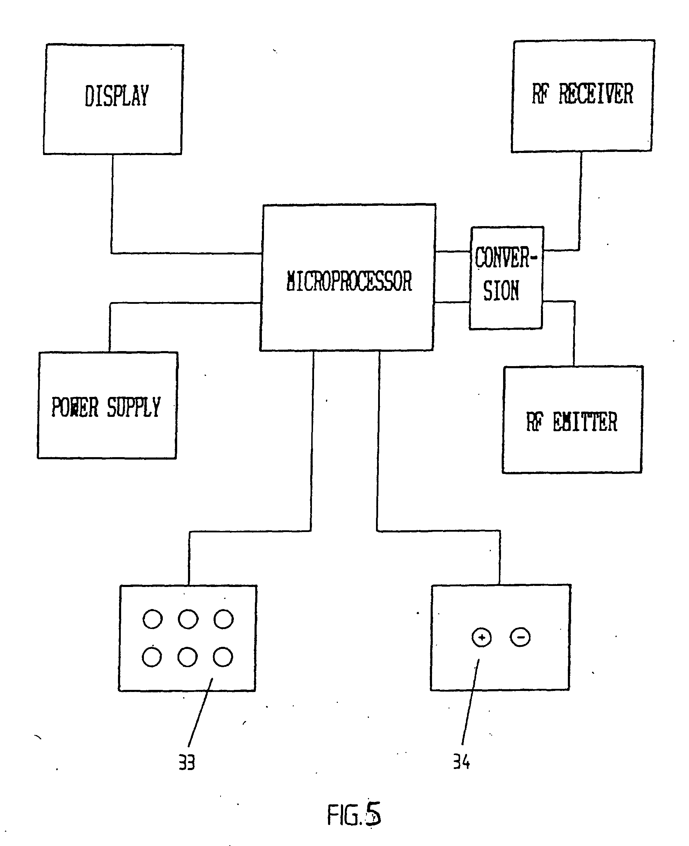

Referring to figures 3, 4 and 5 an alternative embodiment of the object of the invention is described, according to which a sensor and emitter device (30) is attached to the surface of a tyre rim (31) so that when said rim carries the corresponding pneumatic tyre (shown in broken lines), said device (30) remains inside the tyre to effect the detection of the present pressure and temperature of tyre.

Said device (3a), as it can be seen in figure 4, consists of a microprocessor which governs the operation of the same, a radiofrequency wave receiver and emitter, a converter of radiofrequency waves into electronic signals and vice versa, a pressure meter and a thermocouple.

The remote control apparatus (32) consists of a microprocessor, a display device (DISPLAY), a radiofrequency ; wave receiver and emitter, a converter of radiofrequency waves into electronic signals and vice versa, a supply device, normally a battery, a keyboard (33) and several push-buttons (34) to increase and decrease values shown in the display.

With this arrangement and in order to carry out the measurement of the present pressure and temperature of tyre, the user uses the keyboard (33) to send the correspondig signal for commanding the sensor and emitter device (30) so that the latter performs the corresponding readings of pressure and temperature.

As it has been mentioned hereinabove said command is carried out through radiofrequency waves which are transmitted through the transmitter set of the remote control apparatus and which are received by the receiver of the sensor and emitter device (30). Said radiofrequency waves are later converted into electronic signals by means of the converter of said device (30), which are sent to the microprocessor of the same. The latter, having received the corresponding signal, effects the measurement of the pressure by the pressure meter, and of the temperature by the thermocouple of the sensor and emitter device (30). Once the measurements are carried out, the microprocessor sends the signals corresponding to measured data to the converter for their convertion into radiofrequency waves which are emitted towards the outside by the radiofrequency emitter of the sensor and emitter device (30).

The waves emitted by said device (30) are received by the radiofrequency receiver of the remote control apparatus (32) and once converted into electronic signals by the converter of said apparatus, they are sent to the microprocessor of the same. This latter, according to the received values calculates the equivalent pressure with which the tyre is to be provided. All data related to the present pressure and temperature and nominal pressure can be visualized through the display of the remote control apparatus (32).

The air supplying machine (3) incorporates a radiofrequency waves receiver device (35) capable of receiving the waves emitted by the remote control apparatus (32) as it is shown in Figure 3. In this way, once the value of pressure equivalent to the nominal for tyre has been obtained, the user directs the remote control apparatus towards the air supplying machine (3) and by pressing the corresponding push-button, the user immediately sends by way of radiofrequency waves the value of the equivalent pressure to the receiver device (35) of the air supplying machine (3). Said receiver device (35) provides the microprocessor of the air supplying machine (3) with the value of the equivalent pressure by means of electronic signals, the microprocessor thus automatically starting to supply the equivalent pressure to the tyre. The process for the reception of radiofrequency waves untill their sending to the microprocessor is similar to that of the sensor and emitter device (30) and that of the remote control apparatus (32) for which in order to avoid repetitions its detailed description is ommited .

It is to be mentioned that the air supplying machine may carry out, by means of its microprocessor, the calculation of the pressure equivalent to the nominal, so that in this case this task would not be carried out in the remote control apparatus; the latter therefore would only be limited to the sending of the values of the present temperature and pressure of tyre to the air supplying machine.

Optionally the remote control apparatus (32) may be installed into the vehicle, for example in the front panel of the inner space of the same, in such a manner that the user, for example the driver, while driving can effect the checking of the present pressure and temperature of each tyre of the vehicle.

The method for measurement and calculation of the equivalent pressure is similar to that of the previous case except that in this case the remote control apparatus would emit and receive radiofrequency waves related to each wheel through independent activator devices installed nearby each tyre and intended to activating a sensor and emitter device (30) of each corresponding wheel.

Said independent activator devices are installed in the bodywork of the vehicle and are connected by cables to the remote control apparatus installed inside the vehicle.

In this way the driver or any other occupant of the vehicle would be able to check data regarding the present pressure and temperature and to calculate the equivalent pressure of each wheel, even while the vehicle is in movement.

In this case the remote control apparatus displays the values corresponding to each wheel independently, either successively or by pushing a key corresponding to a wheel and further keys corresponding to other wheels.

The method and the system for pressure measurement and adjustment described hereinabove further permit the execution of certain functions in an automatic manner and without the direct intervention of the user.

One of said functions, here described in a non-limitative manner, is to effect the pressure measurement and adjustment of all the tyres of the vehicle automatically.

In order to do so, a mechanism for locating the valve of the tyre is used. As it is shown in figure 8, said localization mechanism (70) consists of several rollers (71) arranged to allow the wheel (72) to be situated thereon, while they are capable of rotating around a respective axis (73) by means of the activation of a motor (79) or a similar system, in such a way that their synchronized rotation forces the wheel (72) to rotate around its axis (74).

Due to said rotation of the wheel (72), the tyre valve (75) moves in a circular path untill a proximity detection device (76) detects its presence. The detection of the presence of valve (75) is communicated by electronic signals to a control equipment (77).

Said equipment uses a microprocessor (not shown in figure) which governs the automatic operation of the whole system.

After having detected the presence of said valve, said microprocessor sends a stopping signal to the working mechanism (79) thereby stopping the rotation of roller (72). Therefore valve (75) remains situated in a pre-determined position to later receive the air supplying mouthpiece (18).

Once the valve is situated in said pre-determined position, the microprocessor of the control equipment (77) commands a mechanism (78) for activating the air supplying mouthpiece (80) to make the latter move and be placed on the valve (75).

Once the mouthpiece (18) is placed on the valve (75), the process of pressure measurement and adjustment is carried out as described above.

This automatic operation system may be installed in places where vehicles call in order to obtain services such as a car wash, a vehicle technical inspection station, etc.

**Claims**

1.  Method for measuring and adjusting pressure of vehicle tyres including the following steps of:

    - measuring the pressure and the temperature inside the tyre when the tyre is under conditions of temperature and pressure different from the nominal values which correspond to a temperature defined as ambient temperature, and a pressure of the tyre at rest,
    - calculating an equivalent pressure value to the nominal pressure as a function of said measured pressure and temperature values, and displaying said measured pressure and temperature values and said equivalent pressure value,

**characterized in that** the method comprises the additional steps of:

- commanding by means of radiofrequency waves a sensor and receiver/emitter device (30) located inside the tyre causing the sensor and receiver/emitter device to carry out the measurement of the pressure and temperature inside the tyre from a remote control apparatus (32),

- transmitting by means of radiofrequency waves, the measured values from the sensor and a sensor and receiver/emitter device (30) to the remote control apparatus (32),

- transmitting by means of radiofrequency waves, from the remote control apparatus (32) to a pressured air supplying machine (3), either the calculated equivalent pressure value of the nominal pressure, or the measured values of the pressure and temperatuce inside the tyre, and

- supplying automatically air to the tyre in order to adjust the tyre equivalent pressure to the nominal pressure given by the manufacturer.

2. Method according to the previous claim, **characterized in that** the pressured air supplying machine (3) calculates the equivalent pressure value to the nominal pressure as a function of the measured temperature and pressure values present in the tyre, by a microprocessor incorporated in the pressured air supplying machine.

3. Method according to the previous claims, **characterized in that** the remote control apparatus (32) calculates the equivalent pressure value to the nominal pressure as a function of the measured temperature and pressure values present in the tyre, by a microprocessor incorporated in the remote control apparatus.

4. Method according to the previous claims, **characterized in that** the nominal pressure value of the tyre at ambient temperature is introduced into the pressured air supplying machine (3) by means of a number of push-buttons (22).

5. Method according to the previous claims, **characterized in that** the nominal pressure value of the tyre at ambient temperature is introduced into the remote control apparatus (32) by means of a number of push-buttons (33).

6. System for carrying out the method of claim 1, of the type which uses a pressured air supplying machine (3), **characterized in that** it further comprises at least one sensor and receiver/emitter device (30) arranged on a surface of a rim (31) inside a tyre capable of measuring pressure and temperature inside a tyre and receiving and emitting radiofrequency signals in association to at least one remote control apparatus (32) adapted for emitting radiofrequency signals to said sensor and receiver emitter device (30) causing said sensor and receiver/emitter device to carry out said measurements, and for receiving radiofrequency signales carrying information related to the measured values emitted by the sensor and receiver/emitter device (30); and a device for receiving radiofrequency waves (35) arranged inside said pressured air supplying machine (3) adapted for receiving radiofrequency signals emitted by the remote control apparatus (32) said latter signals carrying information related to the pressure equivalent to the nominal pressure or related to values of temperature and pressure measured inside the tyre.

7. System according to claim 6 **characterized in that** the sensor and receiver/emitter device (30) consists of means for measuring the pressure and the temperature inside the tyre, means for emitting and receiving radiofrequency waves, means for converting radiofrequency waves into electronic signals and vice versa, a microprocessor suitable for governing the operation of the sensor and emitter device and a power supply device, preferably an electric supply battery.

8. System according to claim 6 **characterized in that** the remote control apparatus (32) consists of means for emitting and receiving radiofrequency waves, means for converting radiofrequency waves into electronic signals and vice versa, a microprocessor suitable for governing the operation of the remote control apparatus, means for displaying processed data, a keyboard for introducing pressure values in the remote control apparatus (32) and sending signals for commanding the sensor and receiver/emitter device (30), a series of push-buttons (34) arranged for changing said pressure values and a power supply device, preferably an electric supply battery.

9. System according to claim 6 **characterized in that** the pressured air the supplying machine (3) essentially consists of a microprocessor suitable for governing the operation of the machine, a keyboard (22) for introducing pressure values in said machine (3), a series of push-buttons (23) arranged for changing pressure values in the air supplying machine (3), a pneumatic group for inflating associated to a hose (17) for the passage of air ending at a connection mouthpiece (18).

10. System according to claim 9 **characterized in that** the pressured air supplying machine (3) incorporates means for receiving radiofrequency waves and means for converting said waves into electronic signals and for supplying them to said microprocessor of said machine.

11. System according to claim 8 **characterized in that** remote control apparatus (32) is portable.

12. System according to claim 8 **characterized in that** the remote control apparatus is fixed inside the vehicle, preferably on the front panel inside the same.

13. System according to claim 12 **characterized in that** the means for receiving and emitting radiofrequency waves are fixed on the vehicle bodywork nearby each wheel of the same.

14. System according to claims 9-10, **characterized in that** the air supplying mouthpiece (18) consists of an evolving body (41) inside of which there are situated: an outlet tip (42) threaded in an end inside a blocking body (43) which has a generally cylindrical configuration with a portion of the same having a larger diameter and provided with a series of movable portions separated by a series of longitudinal grooves (44) situated at a portion of smaller diameter; a cylindrical sleeve (49) inside which there is a rod (51) which passes through a central orifice located at a base surface (50) at one end of the sleeve (49); a spring (52) on which an end of the rod (51) rests; an elastic joint (53) arranged on the base surface (50) of said sleeve (49); and a servoclip (54) located at an end of said evolving body (41) which corresponds to said outlet tip (42).

15. System according to claim 14 **characterized in that** the evolving body (41) has a cylindrical portion of longer diameter on the surface of which a series of ribs are observed.

16. System according to claim 14 **characterized in that** the blocking body (43) is made of a material, preferably of metal, which has flexibility in a radial direction.

17. System according to claim 14 **characterized in that** the blocking body (43) has respective salient portions (47) at the free end of each one of the movable portions (45), and the evolving body (41) has at an end opposite to the outlet tip and at the inner surface thereof a perimetric (46) recess coinciding with said salient portions (47) of the blocking body (43).

18. System according to claim 14 **characterized in that** the rod (51) of the air supplying mouthpiece (18) has a cubic or rectangular-prismatic configuration at the end which remains inside the sleeve (49) of said mothpiece (18), and a plane base at the opposite end.

19. System according to claim 14 **characterized in that** the evolving body (41) is displaceable on the blocking body (43) until the salient portions (47) of the latter fit into the perimetric recess (46) of the former due to the tendency of said salient portions (47) to move in a radial direction towards the outside in the unblocking position.

20. System according to the previous claims, **characterized in that** the air supplying machine includes a tool (60) which consists of an essentialy cylindrical body (61) which has at an end thereof a cavity (62) axially arranged to permit the placing of a rod-shaped utensil (63) whose free end (64) has a configuration suitable for being coupled to a valve core, said rod (63) remaining fixed inside said cylindrical body (61); another cavity (63) axially arranged at the opposite end having a first portion (66) of larger diameter and with a key-shaped configuration suitable for manipulating valves, end caps and the like, and a second portion (67) continuing from the first portion with a smaller diameter to allow the introduction of valve ends while they are being manipulated by the first portion (66).

21. System according to the previous claims, **characterized in that** it consists of rollers (71) which are capable of rotating in a synchronized manner around their respective axial axes (73) and are arranged so as to permit the vehicle wheel (72) to be placed on the same for transmitting the rotation of said rollers (71) to said wheel (72), said rollers (71) being operated by an operating mechanism (79) such as an electric motor; a proximity detection (76) device, an air supplying mouthpiece (18), an equipment for displacement (78) of said air supplying mouthpiece (18), and a control equipment (77) intended for governing the operation of the components of the system.

22. System according to claim 21 **characterized in that** the proximity detection device (76) is intended for detecting the position of the tyre valve (75) during the rotation of the wheel and for sending electronic signals of proximity detection to the control equipment (77).

23. System according to claim 21 **characterized in that** the equipment for the displacement (78) of the air supplying mouthpiece is adapted to receive signals from the control equipment (77) to displace the air supplying mouthpiece (18) to the tyre valve (75), and to effect the coupling of said mouthpiece to said valve.

**Patentansprüche**

1. Das Verfahren zum Messen und Regeln des Reifendrucks von Fahrzeugreifen beinhaltet die folgende Schritte:

   - Messen des Drucks und der Temperatur innerhalb des Reifens, wenn der Reifen Bedingungen von Temperatur und Druck ausgesetzt ist, die sich von den nominalen Werten unterscheiden, wobei letztere sich auf eine als Aussentemperatur definierten Temperatur und einen als Ruhedruck des Reifens definierten Drucks beziehen.
   - Berechnung eines zum nominalen Druck equivalenten Druckwertes als Funktion von besagtem gemessenen Druck- und Temperaturwerten, sowie Anzeigen besagten gemessenen Druck- und Temperaturwertes und des equivalenten Druckwertes auf eine solche Art und Weise, dass bei diesem Vorgang folgende Schritte berücksichtigt sind:

     - Steurung per Funkwellen der Sensor-, Sende- und Empfangseinrichtung (30), die zur Messung des Drucks und der Temperatur im Inneren des Reifens mittels einer ferngesteuerten Kontrolleinrichtung (32),
     - Übermittlung der vom Sensor und Sensor-, Sende- und Empfangseinrichtung (30) gemessenen Werte zur ferngesteuerten Steuerungseinrichtung (32) mittles Funks,
     - Übermittlung mittels Funk des berechneten equivalenten Druckwertes des nominalen Drucks oder des im Reifeninneren ermittelten Druck- und Temperaturwertes von der ferngesteurten Steuerungseinrichtung (32) zu einer Druckluftzulieferungseinrichtung (3), sowie
     - die automatische Zuführung von Luft in den Reifen, um eine Einstellung des equivalenten Druckwertes des, vom Hersteller vorgegeben, Nominaldrucks zu erwirken.

2. Verfahren in Bezug zu vorigem Anspruch, **dadurch gekennzeichnet, dass** die Druckluftzulieferungseinrichtung (3) mittels eines in die Druckluftzulieferungseinrichtung (3) eingebunden Mikroprozessors den equivalenten Druckwert des Nominaldrucks, in Funktion des ermittelten Temperatur- und Druckwertes, der in dem Reifeninneren vorherrscht, berechnet.

3. Verfahren in Bezug zu den vorigen Ansprüchen, die durch die ferngesteuerte Steuerungseinrichtung (32) charakterisiert ist, welche den equivalenten Druckwert zum nominal Druck unter Bezugnahme der ermittelten Druck- und Temperaturwerte im Inneren des Reifens mittels eines in die ferngesteuerte Steuerungseinrichtung (32) eingebundenen Mikroprozessors berechnet.

4. Verfahren in Bezug zu den vorigen Ansprüchen, **dadurch gekennzeichnet, dass** der Wert des Nominaldrucks bei Umgebungstemperatur in die Druckluftzulieferungseinrichtung (3) mittles einer Anzahl von Tasten (22) eingegeben werden kann.

5. Verfahren in Bezug zu den den vorherigen Ansprüchen, **dadurch gekennzeichnet, dass** der Wert des Nominaldruckwert des Reifens bei Umgebungstemperatur in die ferngesteuerte Steuerungseinrichtung (32) mittels einer Anzahl von Tasten (22) eingegeben werden kann.

6. System zur Durchführung des Verfahrens von Anspruch 1, das eine Druckluftzulieferungseinrichtung (3) beinhaltet, desweiteren **dadurch gekennzeichnet, dass** es einen Sensor-, Sende- und Empfangseinrichtung (30) beinhaltet, die an der Oberfläche des Randes (31) innerhalb des Reifens so angeordnet ist, dass die Werte des Drucks und der Temperatur im Inneren des Reifens gemessen werden können, wie auch Funksignale von und zu wenigstens einer ferngesteuerten Fernsteuerungseinrichtung (32) empfangen und senden kann, welche zur Übermittelung von Funksignalen zu besagtem Sensor und Sende- und Empfangseinrichtung (30) dient, was bewirkt, dass besagter Sensor und Sende- und Empfangseinrichtung (30) besagte Messungen ausführen, desweiteren Funksignale empfangen, die die Daten zu besagten Messungen beinhalten, gesendet von Sensor und Sende- und Empfangseinrichtung (30); desweiteren eine Einrichtung zum Empfangen von Funksignalen (35), die innerhalb besagter Druckluftzulieferungseinrichtung (3) angebracht sind und für den Empfang von Funksignalen der ferngesteuerten Steuerungseinrichtung (32), wobei besagte Funksignale die Information in Bezug auf den zum Nominaldruck equivalenten Druck oder in Bezug auf die Werte der Temperatur und des Drucks, im Reifeninneren gemessen, darstellen.

7. System nach Anspruch 6, **dadurch gekennzeichnet, dass** die Sensor-, Sendeund Empfangseinrichtung (30) die Möglichkeit des Messens von Druck und Temperatur im Reifeninneren beinhaltet, Möglichkeiten zum Senden und Empfangen von Funksignalen beinhaltet, Möglichkeiten zum Konvertieren von Funksignalen in elektronische Signale und umgekehrt, einen für die Steuerung der Vorgänge in der Sensor-, Sende- und Empfangseinheit geeigneten Mikroprozessor beinhalten, sowie eine Energiezufuhrseinrichtung, bevorzugterweise mittels einer elektrischen Batterie.

8. System nach Anspruch 6, **dadurch gekennzeichnet, dass** die ferngesteuerte Steuerungseinrichtung (32) eine Einrichtung zum Senden und Empfangen von Funksignalen beinhaltet, eine Einrichtung zum Umwandeln der Funksignale in elektronische Signale und umgekehrt, einen Mikroprozessor, der für die Steuerung des Betriebs des ferngesteuerten Steuerungseinrichtung geeignet ist, eine Einrichtung zum Anzeigen der verarbeiteten Daten, ein Keyboard zum Eingeben der Druckwerte in die ferngesteuerte Steuerungseinrichtung (32) und Senden der Signale zum Steuern der Sensor-, Empfangs- und Steuerungseinrichtung (30), eine Anzahl von Tasten (34), welche zum ändern besagter Druckwerte angeordnet sind und die Energieversorgungseinrichtung, welche bevorzugt eine elektrische Versorgung per Batterie ist.

9. Aufbau nach Anspruch 6, der **dadurch gekennzeichnet ist, dass** die Druckluftzulieferungseinrichtung (3) aus einem zur Steuerung des Betriebs der Maschine geeigneten Mikroprozessors, einem Keyboard (22) zum Eingeben der Druckwerte in besagter Maschine (3), einer Anzahl von Tasten (23) zum Verändern der Druckwerte in der Druckluftzulieferungseinrichtung (3) vorgesehen, eine pneumatische Anordnung zum Aufblasen per Zuführung (17) der Luft, was mit dem Stück (18) endet.

10. System nach Anspruch 9, **dadurch gekennzeichnet, dass** die Druckluftzulieferungseinrichtung (3) Mittel zum Empfangen von Funksignalen und deren Umwandlung in elektronische Signale und der Weiterleitung an besagten Mikroprozessor der vorliegenden Maschine beinhaltet.

11. System nach Anspruch 8, **dadurch gekennzeichnet, dass** die ferngesteuerte Steuerungseinrichtung (32) tragbar ist.

12. System nach Anspruch 8, **dadurch gekennzeichnet, dass** die ferngesteuerte Steuerungseinrichtung im Inneren des Fahrzeugs angebracht ist, bevorzugter Weise am Amaturenbrett desselbigen.

13. System nach Anspruch 12, **dadurch gekennzeichnet, dass** die Empfangs- und Sendeeinrichtung an der Fahrzeugchassie in der Nähe jeden Rads angebracht ist.

14. System nach Anspruch 9-10, **dadurch gekennzeichnet, dass** das luftzuführende Stück (18) aus einem sich erweiterndem Körper (41) besteht, in dem eine Auslassspitze (42) sich befindet, die mittels eines Gewindes mit einem Ende des Blockkörpers (43) verbunden ist, der durch eine zylindrische Konfiguration **gekennzeichnet** ist, wobei ein Teil desselben einen grösseren Durchmesser aufweisst und mit einer Reihe von bewegbaren Abschnitten versehen ist, welche durch eine Reihe von länglich angeordneten Furchen (44) getrennt sind, welche sich an Abschnitten mit kleineren Durchmessern befinden; eine zylindrische Muffe (49), in welcher ein Stange (51) angebracht ist, welche durch eine zentrisches Öffnung führt, die sich an der Grundoberfläche (50) an einem Ende der Muffe (49) befindet; eine Feder (52) auf der ein Ende der Stange (51) aufsitz; ein elastisches Gelenk (53), das an der Oberfläche (50) an besagter Muffe (49) angebracht ist; und ein Servoclip (54), der sich am Ende besagten sich erweiternden Körpers (41) befindet, was besagter Auslassspitze (42) entspricht.

15. System nach Anspruch 14, **dadurch gekennzeichnet, dass** der sich erweiternde Körper (41) einen zylindrischen Abschnitt mit grösseren Durchmesser an der Oberfläche hat, an der eine Reihe von Rippen angebracht sind.

16. System nach Anspruch 14, dadruch **gekennzeichnet**, dass der Blockkörper (43) aus einem Material besteht, bevorzugt Metal, welches in Achsrichtung eine flexibele Eigenschaft aufweisst.

17. System nach Anspruch 14, **dadurch gekennzeichnet, dass** der Blockkörper (43) eine entsprechende hervorstehenden Abschnitt (47) an den freien Enden jedes bewegbaren Abschnitts (45) und dass der sich erweiternde Körper (41) an dem der Auslassspitze gegenüberliegenden Ende und an der inneren Oberfläche davon einen umlaufende Nische (46) aufweisst, welche mit besagtem hervorstehendem Abschnitt (47) des Blockkörpers (43) übereinstimmt.

18. System nach Anspruch 14, **dadurch gekennzeichnet, dass** die Stange (51) des Luftzufuhrstücks (18) an dem in der Muffe (49) des Luftzufuhrstücks (18) gelegenen Ende eine kubische oder rechtwinklig-prismatische Anordnung aufweisst und eine plane Grundfläche an dem entgegengesetzt gelegenen Ende.

19. System nach Anspruch 14, dadurch charakterisiert, dass der sich erweiternde Körper (41) am Blockkörper (43) bis an den hervorstehenden Abschnitt (47) deselben verschiebbar angeordnet ist bis der hervorstehende Abschnit (47) des Blockkörpers in die umlaufende Nische (46) sich fügt, wegen der Tendenz des besagten hervorstehenden Abschnitts (47) sich in axialer Richtung nach aussen in eine nicht blockierte Position sich zu bewegen.

20. System nach den vorherigen Ansprüchen, **dadurch gekennzeichnet, dass** die Druckluftzulieferungseinrichtung ein Werkzeug (60) beinhaltet, welches aus einem zylindrischen Körper (61) besteht, der an einem Ende eine axiale Einkerbung (62) aufweisst, die das stangenförmige Utensil (63), dessen freies Ende (64) so geformt ist, um in ein Ventil aufgenommen werden zu können, und diese besagte Stange (63) ruht fest innerhalb des besagten zylindrischen Körpers (61); eine andere axial angeordnerte Einkerbung (63) hat an dem gegenüberliegendem Ende einen Abschnitt (66) grösseren, schlüssel-förmigen Durchmesser, der zum Einstellen des Ventils geeignet ist, Endverschlüsse und einen zweiten Abschnitt (67), der mit einem kleineren Durchmesser vom ersten Abschnitt (66) das Einlassen des Ventilendes erlaubt, während sie vom ersten Abschnitt (66) eingestellt werden.

21. System nach den vorherigen Ansprüchen, **dadurch gekennzeichnet, dass** sie Rollen (71) beinhalten, welche die Fähigkeit besitzten in einer synchronisierten Art um ihre entsprechenden axialen Achsen (73) zu rotieren und so angeordnet sind, dass es dem Fahrzeugreifen (72) erlaubt ist an der der gleichen Achse angebracht zu sein und die Rotation besagter Rollen (71) an besagte Räder (72) weiterzugeben, wobei besagte Rollen (71) von einer Steuerungseinrichtung (79), wie zum Beispiel einem elektrischen Motor, gesteuert werden; eine Abstandsdetektionseinrichtung (76), ein Luftzuführungsstück (18) und eine Steuerungseinrichtung (77) sind zur Steuerung des Betriebs der Komponenten des Aufbaus vorgesehen.

22. Aufbau nach Anspruch 21, **dadurch gekennzeichnet, dass** in der Abstandsdetektionseinrichtung (76) zum Erkennen der Position des Reifenventils (75) während der Rotation des Reifens und der Sendung elektronischer Signale des Abstanderkennung des kontrollierten Aufbaus (77) vorgesehen.

23. Aufbau gemäss Anspruchs 21, dadurch gekennnzeichnet, dass in der Verschiebungseinrichtung (78) der Lufzuführungsstück zum Empfangen von Signalen der Steuerungseinrichtung (77) zum Verschieben des Luftzuführungsstücks (18) zu dem Reifenventil (75) und der Kupplung besagtem Luftzuführungsstücks und besagtem Ventils angepasst ist.

**Revendications**

1. Procédé et système de mesure et d'ajustement de la pression de pneumatiques qui inclut les étapes suivantes:

   ■ Mesurer la pression et la température à l'intérieur du pneu quand le pneu est exposé à des températures et des pressions différentes aux valeurs nominales qui correspondent à la température qui se définie comme température ambiante, et à la pression du pneu au repos.
   ■ Calculer une valeur de pression qui équivaut à la pression nominale en function des valeurs de pression et de température mesurées, et indiquer ces valeurs de pression et de température mesurées et la valeur de pression équivalente, **caractérisées** pour une méthode qui comporte les étapes additionnelles suivantes:

   - Commander par des ondes de radiofréquence un capteur et un dispositif de récepteur/émetteur (30) situés à l'intérieur du pneu provoquant que le capteur et le dispositif de récepteur/émetteur effectuent la mesure de la pression et de la température à l'intérieur du pneu, via un appareil de régulation (32).
   - Transmettre d'un capteur et dispositif de récepteur/émetteur (30) à l'appareil de régulation (32) les valeurs mesurées du capteur via des ondes de radiofréquence.
   - Transmettre de l'appareil de régulation (32) à un alimentateur d'air comprimé (3), la valeur de pression mesurée qui équivaut à la pression nominale, ou les valeurs de pression et de température mesurées à l'intérieur du pneu via des ondes de radiofréquence.
   - Gonfler le pneu automatiquement afin de pourvoir le pneu de la pression qui équivaut à la pression nominale donnée par le fabricant.

2. Méthode conforme à la réclamation précédente, **caractérisée** pour l'alimentateur d'air comprimé (3) qui mesure la valeur de pression qui équivaut à la pression nominale en fonction de la température mesurée et les valeurs de pression du pneu, via un microprocesseur incorporé dans l'alimentateur d'air comprimé (3).

3. Méthode conforme aux réclamations précédentes, **caractérisée** pour l'appareil de régulation (32) qui mesure la valeur de pression qui équivaut à la pression nominale en fonction de la température et des valeurs de pression du pneu, via un microprocesseur incorporé dans l'appareil de régulation.

**4.** Méthode conforme aux réclamations précédentes, **caractérisée** pour l'introduction des valeurs de la pression nominale du pneu à température ambiante, dans l'alimentateur d'air comprimé (3) via un certain nombre de boutons poussoirs.

**5.** Méthode conforme aux réclamations précédentes, **caractérisée** pour l'introduction des valeurs de la pression nominale du pneu à température ambiante, dans l'appareil de régulation (32) via un certain nombre de boutons poussoirs.

**6.** Système pour mettre en oeuvre la méthode de réclamation 1, celle qui utilise l'alimentateur d'air comprimé (3), **caractérisée** pour la possession additionnelle d'au minimum un capteur et dispositif de récepteur/émetteur (30), disposés sur une surface de la jante (31) à l'intérieur du pneu, doués à mesurer la pression et la température à l'intérieure du pneu et à recevoir et émettre des signaux de radiofréquence associés à au moins un appareil de régulation (32) adapté à émettre des signaux de radiofréquence au capteur et au dispositif de récepteur/émetteur (30) mentionnés, provoquant l'exécution de ces mesures par le capteur et le dispositif de récepteur/émetteur (30), et à recevoir des signaux de radiofréquence qui portent l'information relationnée aux valeurs mesurées que le capteur et le dispositif de récepteur/émetteur (30) ont émises; et un dispositif pour recevoir les ondes de radiofréquence (35) placé à l'intérieur de l'alimentateur d'air comprimé (3) adapté à recevoir des signaux de radiofréquence émis pour l'appareil de régulation (32), qui portent l'information relationnée à la pression qui équivaut à la pression nominale ou relationnée aux valeurs de la température et de la pression mesurées à l'intérieur du pneu.

**7.** Système conforme à la réclamation 6, **caractérisé** pour le capteur et dispositif de récepteur/émetteur (30) qui possèdent des moyens pour mesurer la pression et la température à l'intérieur du pneu, des moyens pour émettre et recevoir des ondes de radiofréquence, des moyens pour convertir les ondes de radiofréquence en signaux électroniques et vice versa, un microprocesseur apte à diriger l'opération d'un capteur et dispositif émetteur et dispositif d'alimentation électrique, de préférence une batterie de distribution d'électricité.

**8.** Système conforme à la réclamation 6, **caractérisé** pour l'appareil de régulation (32) qui possède des moyens pour émettre et recevoir des ondes de radiofréquence, des moyens pour convertir des ondes de radiofréquence en signaux électroniques et vice versa, un microprocesseur apte à diriger l'opération de l'appareil de régulation (32), des moyens pour indiquer les données élaborées, un clavier pour introduire les valeurs de pression de l'appareil de régulation (32) et transmettre des signaux pour commander le capteur et dispositif de récepteur/émetteur (30), une série de boutons poussoirs (34) préparés pour changer les valeurs de pression mentionnées et un dispositif d'alimentation électrique, de préférence une batterie de distribution d'électricité.

**9.** Système conforme à la réclamation 6, **caractérisé** pour l'alimentateur d'air comprimé (3) qui possède un microprocesseur essentiel apte à diriger l'opération d'un appareil, un clavier (22) pour introduire les valeurs de pression de cet appareil (3), une série de boutons poussoirs (23) préparés pour changer les valeurs de pression de l'alimentateur d'air comprimé (3), un groupe de pneumatiques pour le gonflage unis à un tuyau (17) pour le passage d'air qui termine en un embout connecté.

**10.** Système conforme à la réclamation 9 **caractérisé** pour l'alimentateur d'air comprimé (3) qui incorpore des moyens pour recevoir des ondes de radiofréquence et des moyens pour convertir ces ondes en signaux électroniques et pour transmettre ces signaux au microprocesseur de cet appareil.

**11.** Système conforme à la réclamation 8 **caractérisé** pour l'appareil de régulation (32) qui est portable.

**12.** Système conforme à la réclamation 8 **caractérisé** pour l'appareil de régulation (32) qui se fixe à l'intérieur du véhicule, de préférence à l'intérieur du panneau avant.

**13.** Système conforme à la réclamation 12 **caractérisé** pour les moyens qui se fixent sur la carrosserie du véhicule à côté de chaque pneu et qui reçoivent et transmettent les ondes de radiofréquence.

**14.** Système conforme aux réclamations 9-10, **caractérisé** pour l'embout de gonflage (18) qui possède un corps développé (41) dans lequel se trouvent: une tubelure d'échappement (42) étirée d'une extrémité à l'intérieur d'un corps de bloc (43) avec une configuration généralement cylindrique, une partie qui a un diamètre plus large et qui est pourvue d'une série de sections déplaçables séparées par une série de rainures longitudinales (44) dont le diamètre est le plus petit; un manchon cylindrique (49) à l'intérieur de la partie dont se trouve un tringle (51) qui passe via l'orifice centrale située à la surface de fondation (50) à une extrémité du manchon (49); un ressort (52) sur lequel une extrémité du tringle (51) se repose; un joint élastique (53) disposé sur la surface de fondation (50) du manchon mentionné (49); et un clip de servo (54) situé sur une extrémité du corps développé (41) qui correspond à la tubelure d'échappement (42).

**15.** Système conforme à la réclamation 14 **caractérisé** pour le corps développé (41) qui possède une section cylindrique d'un diamètre plus longue dont la surface expose une série de nervures.

**16.** Système conforme à la réclamation 14 **caractérisé** pour le corps de bloc (43) qui est construit d'un matériel, de préférence métal, flexible dans la direction radiale.

**17.** Système conforme à la réclamation 14 **caractérisé** pour le corps de bloc (43) qui possède des sections saillantes (47) à l'extrémité libre de chaque section déplaçable (45), et le corps développé (41) qui possède à l'extrémité opposée à la tubelure d'échappement et à la surface interne de celle-là, un collet périmétrique (46) qui coïncide avec les sections saillantes (47) du corps de bloc (43).

**18.** Système conforme à la réclamation 14 **caractérisé** pour le tringle (51) de l'embout de gonflage (18) qui a une configuration cubique ou rectangulaire-prismatique à l'extrémité qui reste à l'intérieur du manchon (49) de cet embout de gonflage (18), et plan d'appui à l'extrémité opposée.

**19.** Système conforme à la réclamation 14 **caractérisé** pour le corps développé (41) qui peut se déplacer sur le corps de bloc (43) jusce qu'à l'insertion des sections saillantes (47) dans le collet périmétrique (46) du support, dû à la tendance des sections saillantes (47) mentionnées de se mouvoir dans une direction radiale à l'extérieur à la position de déblocage.

**20.** Système conforme aux réclamations précédentes, **caractérisé** pour l'alimentateur d'air comprimé (3) qui possède des outils (60) qui consistent en un corps cylindrique essentiel (61) qui dispose à l'extrémité d'une cavité (62) à axe pour permettre le déplacement de l'outil en forme de tringle (63) duquel l'extrémité libre (64) possède une configuration apte à être accouplée à un obus de valve, ce tringle (63) reste fixe à l'intérieur du corps cylindrique (61) mentionné; autre cavité (62) à axe déposée sur l'extrémité opposée qui possède une première section (66) avec un diamètre plus large et une configuration en forme de clef apte à manipuler les valves, et les bouchons d'extrémité et ressemblants, et une deuxième section (67), qui est la continuation de la première, avec un diamètre plus petit, qui permet l'introduction des extrémités des valves lorsqu'elles sont manipulées par la première section (66).

**21.** Système conforme aux réclamations précédentes, **caractérisé** pour la composition de rouleaux (71) qui sont capables de se tourner de manière synchronisée autour de leurs axes (73) et qui permettent que le pneumatique (72) se déplace sur les mêmes pour transmettre la rotation des rouleaux (71) mentionnés au pneumatique (72), ces rouleaux (71) s'opèrent via un méchanisme opérationnel (79) comme un moteur électronique; un dispositif de détection (76) de l'embout de gonflage (18), un équipement pour déplacer (78) cet embout de gonflage (18), et un équipement de contrôle (77) pour diriger l'opération des éléments de construction du système.

**22.** Système conforme à la réclamation 21 **caractérisé** pour la proximité d'un dispositif de détection qui détecte la position de la valve du pneu (75) lors de la rotation du pneu et pour la transmission de signaux électroniques de détection proches à l'équipement de contrôle.

**23.** Système conforme à la réclamation 21 **caractérisé** pour l'équipement qui déplace (78) l'embout de gonflage (18) qui s'adapte pour recevoir des signaux de l'équipement de contrôle (77) afin de déplacer l'embout de gonflage (18) à la valve du pneu (75), et l'effet de couplage de cet embout à la valve.

Fig. 1

Fig. 2

FIG.3

THERMOCOUPLE

RF RECEIVER

MICROPROCESSOR

CONVER-
SION

POWER SUPPLY

RF EMITTER

PRESSURE
MEASURER

FIG.4

```
                                          RF RECEIVER
    DISPLAY




                  MICROPROCESSOR       CONVER-
                                         SION


    POWER SUPPLY
                                          RF EMITTER




        ○ ○ ○                              ⊕  ⊖
        ○ ○ ○


        33                                 34
```

FIG.5

Fig. 6

Fig. 6(a)

Fig. 7

Fig. 8